# EUROPÄISCHE PATENTSCHRIFT

(11) **EP 0 528 759 B1**
(45) Veröffentlichungstag und Bekanntmachung des Hinweises auf die Patenterteilung: **27.12.1995**
(21) Anmeldenummer: 92810575.8
(22) Anmeldetag: 28.07.1992
(51) Int. Cl.: A47J 31/40

(54) **Antriebsvorrichtung für eine Brüheinrichtung einer Kaffeemaschine**
Driving device for a brewing unit in a coffee machine
Dispositif d'entraînement d'un ensemble pour faire des infusions dans une machine à café

(30) Priorität: 30.07.1991 CH 2284/91
(43) Veröffentlichungstag der Anmeldung: 24.02.1993
(73) Patentinhaber: SINTRA HOLDING AG, CH-6210 Sursee (CH)
(72) Erfinder: Lüssi, André, CH-3084 Wabern (CH); Zurbuchen, Hans, CH-3084 Wabern (CH); von Gunten, Jürg, CH-3506 Grosshöchstetten (CH)
(74) Vertreter: Fischer, Franz Josef

(56) Entgegenhaltungen:
- EP-A- 0 154 206
- EP-A- 0 237 399
- DE-C- 4 002 415
- US-A- 2 176 823

## Beschreibung

Die vorliegende Erfindung bezieht sich auf eine Antriebsvorrichtung für eine Brüheinrichtung einer Kaffeemaschine gemäss dem Oberbegriff des Patentanspruches 1.

Das Zubereiten von Kaffee mit Kaffeemaschinen wird nach verschiedenen Verfahren ausgeführt, die sich in zwei Grundtypen unterscheiden lassen. Man unterscheidet einen ersten Verfahrenstyp, bei welchem das heisse Wasser einzig und allein infolge der Schwerkraft das in einem Filter befindliche Kaffeepulver durchläuft, von demjenigen Verfahrenstyp, bei welchem das heisse Wasser unter Druck durch das Kaffeepulver gefördert wird (Espresso- oder Druckbrühverfahren). Die vorliegende Erfindung bezieht sich insbesondere auf das zuletzt erwähnte Druckbrühverfahren. Zum automatischen Ausführen dieses Verfahrens sind bereits verschiedene Einrichtungen bekannt. Je nach Anwendungsbereich, beispielsweise für den Haushalt oder den Gaststättenbereich unterscheiden sich diese bekannten Kaffeemaschinen in ihrem Aufbau insbesondere im Hinblick auf Robustheit, Flexibilität im Ablauf des Verfahrens, Bedienungs- und Wartungskomfort etc.

Ueblicherweise bestehen solche Kaffeemaschinen aus einer Brüheinrichtung und einem mehr oder weniger aufwendigen Mechanismus zum Antreiben der beweglichen Teile der Brüheinrichtung. Bestrebungen gehen dahin, ein einziges Antriebsorgan in einer Kaffeemaschine vorzusehen und damit alle die beweglichen Teile der Brüheinrichtung über den genannten Mechanismus anzutreiben. In der Druckschrift EP-A-0 154 206 ist eine Kaffeemaschine offenbart, die nach den oben beschriebenen Prinzipien aufgebaut ist, wobei alle einer Verschmutzung unterworfenen Teile der Maschine, im wesentlichen die gesamte Brüheinrichtung, mit dem Antriebsmechanismus zu einem einschiebbaren Bauteil zusammengefasst sind, wobei dieser Bauteil über Kupplungsmittel mit dem einzigen Antriebsorgan wirkverbunden ist. Der Mechanismus zum Antrieb der einzelnen Teile der Brüheinrichtung umfasst mehrere Antriebsgestänge mit Schlitzen, Nocken und Nuten und ist demzufolge entsprechend aüfwendig gebaut. Trotz dem herausnehmbaren Bauteil ist das Reinigen der verschiedenen Nuten und Schlitze von eventuell darin anhaftendem Kaffeepulver nicht ganz problemlos.

Es ist die Aufgabe der vorliegenden Erfindung, eine weitere Ausführung einer Antriebsvorrichtung für eine Brüheinrichtung einer Kaffeemaschine zu schaffen, deren Aufbau einfach und verschmutzungsunempfindlich sein soll und die in einer bevorzugten Ausführungsform insbesondere auch dazu geeignet ist mehrere Brüheinrichtungen gleichzeitig und gemeinsam anzutreiben.

Die Lösung dieser Aufgabe erfolgt mit einer Antriebsvorrichtung, die die im kennzeichnenden Teil des Patentanspruches 1 aufgeführten Merkmale aufweist.

Die bevorzugte Ausführung, bei der mehrere Brüheinrichtungen über die gleiche und einzige Antriebsvorrichtung antreibbar sind, umfasst die Merkmale des abhängigen Patentanspruches 2.

Weitere vorteilhafte Ausbildungen der Erfindung sind durch die abhängigen Patentansprüche 3 bis 6 gekennzeichnet.

Anhand von Figuren soll die Erfindung im folgenden beispielsweise näher erläutert werden. Es zeigen
**Fig. 1** einen von der Seite betrachteten, teilweisen Längsschnitt durch eine bevorzugte Ausführungsform von in der Einfüllstellung dargestellten Brüheinrichtungen mit einer erfindungsgemässen Antriebsvorrichtung.
**Fig. 2** eine Frontansicht der in der Fig. 1 gezeigten Brüheinrichtungen,
**Fig. 3** eine Aufsicht der in der Fig. 1 dargestellten Brüheinrichtungen und
**Fig. 4** eine weitere Brüheinrichtungsanordnung der um die erfindungsgemässe Antriebsvorrichtung.

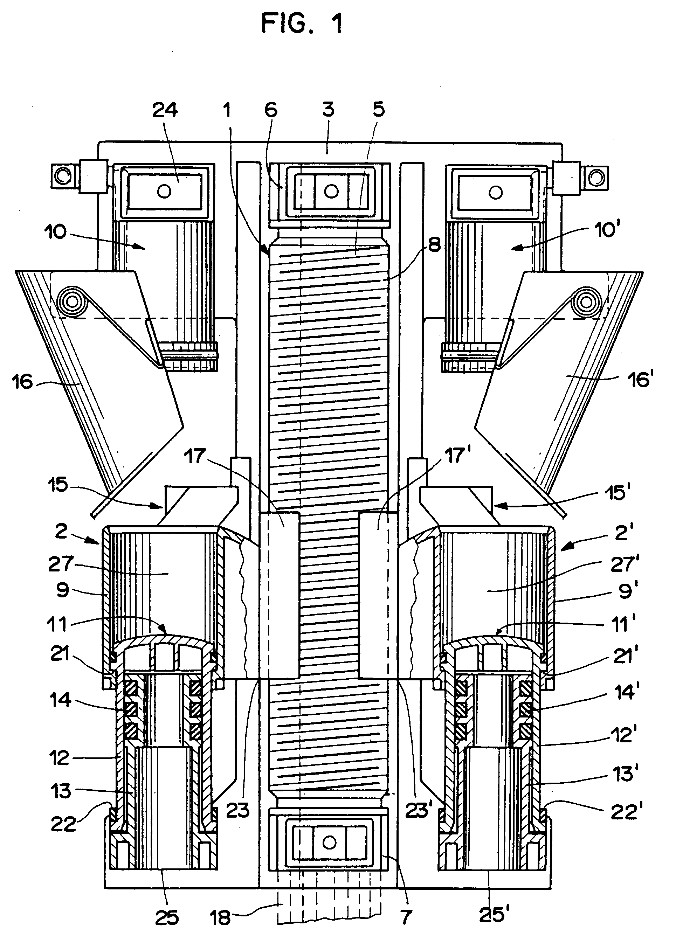

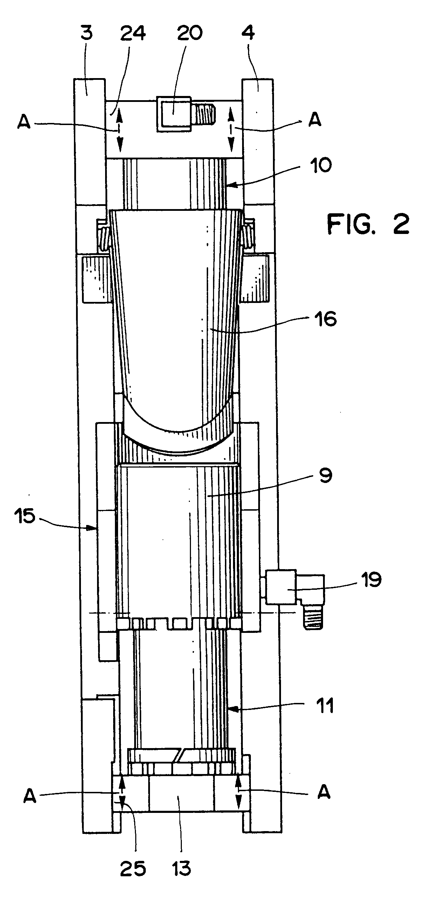

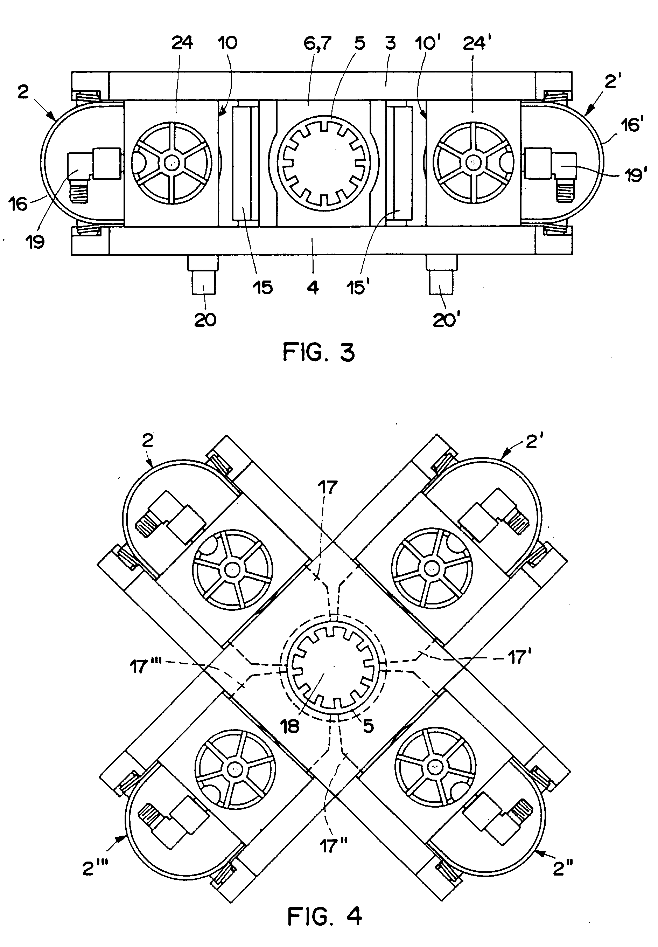

Die Fig. 1, 2 und 3 zeigen je zwei Brüheinrichtungen 2, 2′ einer Kaffeemaschine in einem von der Seite betrachteten teilweisen Längsschnitt (Fig. 1), in einer Frontansicht, bei der lediglich die eine der Brüheinrichtungen 2 sichtbar ist (Fig. 2) sowie in einer Aufsicht (Fig. 3), je in der Einfüllstellung. In den Figuren sind die wesentlichsten Funktionskomponenten der Brüheinrichtungen 2, 2′ sowie die erfindungsgemässe Antriebsvorrichtung 1 dargestellt. Die Bezugszeichen von korrespondierenden Teilen der einen Brüheinrichtung 2 sind in der anderen der Brüheinrichtungen 2′ je mit einem Strich versehen. Es wird in der nachfolgenden Beschreibung stillschweigend angenommen, dass das für jeden Teil der einen Brüheinrichtung 2 Gesagte, ohne besonders erwähnt zu werden, auch für den korrespondierenden Teil der anderen Brüheinrichtung 2′ gilt.

Die Brüheinrichtungen 2, 2′ sind an einem Gestell montiert, das im wesentlichen eine erste und eine zweite Seitenwange 3, 4 aufweist, welche Seitenwangen parallel zueinander verlaufen, indem sie durch entsprechende Distanzhaltemittel voneinander beabstandet montiert sind. Zwischen den beiden Brüheinrichtungen 2, 2′, die spiegelbildlich zueinander zwischen den beiden Seitenwangen 3, 4 angeordnet und je von den Längsseitenflächen eines im wesentlichen durch die beiden Seitenwangen 3, 4 aufgespannten Quaders her zugänglich sind, erstreckt sich eine Antriebsspindel 5 etwa über die ganze Länge der beiden Seitenwangen 3, 4. Je das eine Ende der Antriebsspindel 5 ist in einem ersten oder oberen Spindellager 6 bzw. in einem zweiten oder unteren Spindellager 7 drehbar gelagert und gleichzeitig gegen eine Längsverschiebung gesichert. Jedes der genannten Spindellager 6, 7 weist gegen die beiden Seitenwangen 3, 4 hin sich ausdehnende Erweiterungen auf, an denen die Seitenwangen befestigt sind. Die Spindellager 6, 7 dienen gleichzeitig als Distanzhaltemittel der beiden Seitenwangen 3, 4. Jede der Brüheinrichtungen 2, 2′ umfasst je einen ersten oder oberen Kolben 10, 10′, der mit den beiden Seitenwangen 3, 4 unbeweglich verbunden ist. In je einem im wesentlichen hohlzylinderförmigen Brühzylinder 9, 9′ ist ein zweiter oder unterer Kolben 11, 11′ angeordnet. Der untere Kolben 11, 11′ ist innerhalb seinem Brühzylinder 9, 9′ längsverschiebbar beweglich gehalten. Der zweite Kolben 11, 11′ umfasst einen hohlzylinderförmigen Schaft 12, 12′, der sich je vom Brühzylinder 9, 9′ wegerstreckt. An beiden Enden des hohlzylinderförmigen Schaftes 12, 12′ sind je erste und zweite Anschlagsmittel 21, 21′, 22, 22′ vorhanden, die zum Begrenzen der Verschiebebewegung des zweiten Kolbens 11, 11′ innerhalb des Brühzylinders 9, 9′ bestimmt sind. Je der zweite Kolben 11, 11′ ist mit seinem hohlzylinderförmigen Schaft 12, 12′ über je einen unbeweglich zwischen den genannten Seitenwangen 3, 4 gehaltenen Stutzen 13, 13′ geschoben. An dem dem Brühzylinder 9, 9′ zugewandten Ende der Stutzen 13, 13′ sind mehrere O-Ringe 14, 14′ in dazu vorgesehene Nuten eingelegt.

Je das den O-Ringen 14, 14′ abgewandte Ende der Stutzen 13, 13′ weist seitwärts gegen die Seitenwangen 3, 4 gerichtete Erweiterungen 25 auf, an welchen die Stutzen mit den Seitenwangen verbunden sind. Je das den Brüheinrichtungen 9, 9′ abgewandte Ende der ersten Kolben 10, 10′ ist mit äquivalenten seitlichen Erweiterungen 24, 24′ versehen, welche zum Befestigen des genannten Kolbens zwischen den Seitenwangen 3, 4 bestimmt sind. Die Erweiterungen 24, 24′, 25, 25′ dienen gleichzeitig dazu, die Seitenwangen 3, 4 auf die gewünschte Distanz zu halten. Je ein im Bereich der ersten Kolben 10, 10′ verschwenkbar angeordneter Einfülltrichter 16, 16′ dient zum Einfüllen von Kaffeepulver in die Brühzylinder 9, 9′.

Jeder dieser Brühzylinder 9, 9′ weist ein gegen die Antriebsspindel 5 gerichtetes Mitnahmeorgan 17, 17′ auf. Die hohlzylinderförmig hergestellte Antriebsspindel 5 ist an ihrer äusseren Mantelfläche mit einem ersten Führungsmittel 8 versehen. Jedes der Mitnahmeorgane 17, 17′, das im wesentlichen die Gestalt eines sektorförmigen Ausschnittes eines Hohlzylinders hat, weist auf der seinem zugeordneten Brühzylinder 9, 9′ abgewandten Seite in den Figuren nicht sichtbare zweite Führungsmittel auf, welche mit dem ersten Führungsmittel 8 derart korrespondieren, dass beim Drehen der Antriebsspindel 5 in der einen oder anderen Richtung die Brühzylinder 9, 9′ gegen das eine oder das andere Ende der Antriebsspindel 5 hin verschoben werden. Zum Erreichen einer Brühstellung sind sie zu den ersten Kolben 10, 10′ hin verschiebbar. Nachdem vorgängig durch Auflaufflächen die Einfülltrichter 16, 16′ nach aussen verschwenkt worden sind, gleiten die Brühzylinder 9, 9′ über die ersten Kolben 10, 10′ hinweg, wobei in jedem der Brühzylinder eine Brühkammer gebildet wird. Der Schaft 12, 12′ ist bei dieser Verschiebebewegung von seinen zugeordneten Stutzen 13, 13′ abgehoben worden. Heisses Wasser wird unter Druck über die ersten Anschlussnippel 19, 19′ in die Brühkammern geleitet und durchströmt das in der letzteren vorhandene Kaffeepulver. Der erzeugte Kaffee wird über die zweiten Anschlussnippel 20, 20′ abgeleitet.

Beim anschliessenden Zurücksetzen der Brühzylinder 9, 9′ treffen die je einander zugewandten Enden des Schaftes 12, 12′ und des Stutzens 13, 13′ aneinander. Dadurch wird die Rücksetzbewegung der zweiten Kolben 11, 11′ gegenüber derjenigen der Brühzylinder 9, 9′ gehemmt oder verlangsamt. Relativ zu den Brühzylindern 9, 9′ bewegen sich deshalb die zweiten Kolben 11, 11′ gegen je das freie Ende der ersteren hin. Dadurch wird das ausgelaugte, zu einem Kuchen gepresste Kaffeepulver aus den Brühzylindern herausgefördert. Mit je einer in den Figuren nur angedeuteten Ausstossvorrichtung 15, 15′, die nach auswärts verschwenkbar ist, wird der Kaffeepulverkuchen anschliessend von der Stirnfläche der zweiten Kolben 11, 11′ abgestreift.

Die erfindungsgemässe Antriebsvorrichtung, die die bereits genannte Antriebsspindel 5 und das ebenfalls bereits genannte Mitnahmeorgan 17, 17′ von jeder der Brüheinrichtungen 2, 2′ umfasst, weist im weiteren eine Antriebswelle 18 auf, die an einem der Antriebsspindel 5 zugewandten Ende längs gerillt ist, wobei die Rillen der Antriebswelle 18 in entsprechend ausgebildete Nuten, welche um den inneren Umfang der hohlzylinderförmigen Antriebsspindel 5 verteilt sind, einschiebbar sind. Das andere in den Figuren nicht sichtbare Ende der Antriebswelle 18 ist mit einem Antriebsmotor verbunden. Jedes der Mitnahmeorgane 17, 17′ ist so ausgeführt, dass es den peripheren Umfang der Antriebsspindel 5 höchstens zur Hälfte umfasst.

Vorteilhafterweise ist das erste Führungsmittel als mehrgängiges Spindelgewinde 8 ausgebildet, das sich schraubenlinienförmig im wesentlichen über die ganze Länge der Antriebsspindel 5 erstreckt, welche durch die Spindellager 6, 7 begrenzt ist. Die zweiten Führungsmittel, die auf der dem Spindelgewinde 8 zugewandten Fläche der Mitnahmeorgane 17, 17′ angeordnet sind, umfassen bei dieser bevorzugten Ausführungsform mit dem Spindelgewinde 8 zusammenwirkende Teilgewindegänge eines Innengewindes. Die Steigung des Spindelgewindes 8 ist so gewählt, dass in Folge der Gewindegangreibungen beim Brühen des Kaffees unter Druck bei nicht gebremster Antriebsspindel 5 keine Rücksetzbewegung der Brühzylinder 9, 9′ erfolgt.

Die Mitnahmeorgane 17, 17′ sind an den Brühzylindern 9, 9′ in Richtung der Brühzylinderachsen 27, 27′ längs verschiebbar angeordnet. Dies ist erforderlich um die Gewindegangsteigung des Spindelgewindes 8 von um den Umfang der Antriebsspindel 5 angeordneten Brüheinrichtungen 2, 2′ auszugleichen, wie dies durch die Bezugszeichen 23, 23′ angedeutet ist. Ein Ausgleich der Steigung des Spindelgewindes 8 könnte auch dadurch erfolgen, dass die nach seitwärts zu den Seitenwangen 3, 4 hingerichteten Erweiterungen 24, 24′ der ersten Kolben 10, 10′ und 25, 25′ der Stutzen 13, 13′ bezüglich der Seitenwangen 3, 4 je in Längsrichtung verschiebbar befestigbar wären. Diese Möglichkeit ist in der Figur 2 durch die gestrichelten Pfeile A angedeutet.

Die in den Figuren 1 bis 3 dargestellten Brüheinrichtungen 2, 2′, deren Brühzylinderachsen 27, 27′ parallel zur Achse 26 der Antriebsspindel 5 verlaufen, weisen vorzugsweise eine vertikale Betriebsstellung auf. Beim Anordnen von lediglich zwei Brüheinrichtungen wäre es jedoch auch möglich als Betriebsstellung für die genannten Achsen eine horizontale oder schräge Lage zu wählen. Die beiden Brüheinrichtungen wären im ersteren Fall liegend nebeneinander angeordnet. Das Einfüllen des Kaffeepulvers in die Brühzylinder 9, 9′ müsste konstruktiv angepasst werden.

Es braucht nicht besonders erwähnt zu werden, dass sich die erfindungsgemässe Antriebsvorrichtung gleichfalls eignet, wenn im vorgängig beschriebenen Ausführungsbeispiel die eine der Brüheinrichtungen 2′ weggelassen würde. Ebenso ist es möglich, wie dies in der Fig. 4, die eine Aufsicht auf ein weiteres Ausführungsbeispiel zeigt, angedeutet ist, mehr als zwei Brüheinrichtungen gleichmässig um den Umfang der Antriebsspindel 5 verteilt anzuordnen. In der Fig. 4 sind im ganzen vier Brüheinrichtungen 2, 2′, 2˝, 2‴ vorgesehen. Jede dieser Brüheinrichtungen weist ein der Antriebsspindel zugewandtes Antriebsorgan 17, 17′, 17˝, 17‴ auf. Jedes dieser Mitnahmeorgane ist auf der der Antriebsspindel zugewandten Seite mit Teilgewindegängen versehen, die mit dem Spindelgewinde 8 im Eingriff sind. Bei vier Brüheinrichtungen umfasst jedes der Mitnahmeorgane 17, 17′, 17˝, 17‴ den peripheren Umfang der Antriebsspindel 5 höchstens zu einem Viertel, also höchstens zum reziproken Wert der Anzahl der Brüheinrichtungen.

Dadurch, dass das oder die Mitnahmeorgane die Antriebsspindel nicht voll umfassen, können diese kunststoffspritztechnisch einfach und kostengünstig hergestellt werden. Diese Konstruktion weist im weiteren den grossen Vorteil einer selbstreinigenden Wirkung auf. Störungen infolge Gewindegangverschmutzung durch anhaftendes Kaffeepulver können so vermieden werden.

## Patentansprüche

1. Antriebsvorrichtung für eine Brüheinrichtung (2) einer Kaffeemaschine mit einem Gestell (3, 4), einer drehbar am Gestell gelagerten Antriebsspindel (5) mit mindestens einem schraubenlinienförmig verlaufenden, sich im wesentlichen über die ganze Länge der Antriebsspindel (5) erstreckenden ersten Führungsmittel (8), wobei die Brüheinrichtung (2) einen Brühzylinder (9) und zwei Kolben (10, 11) zum Bilden einer Brühkammer umfasst und wobei der Brühzylinder (9) und die Kolben (10, 11) relativ zueinander in der Brühzylinderachse (27) verschiebbar sind und die Antriebsspindel (5) parallel zur Brühzylinderachse (27) verläuft, dadurch gekennzeichnet, dass am Brühzylinder (9) ein Mitnahmeorgan (17) mit einem zweiten Führungsmittel vorhanden ist, das in das erste Führungsmittel (8) der Antriebsspindel (5) eingreift, wobei das Mitnahmeorgan (17) den peripheren Umfang der Antriebsspindel höchstens zur Hälfte umfasst.

2. Antriebsvorrichtung nach Anspruch 1, dadurch gekennzeichnet, dass um den Umfang der Antriebsspindel (5) verteilt mehrere Brüheinrichtungen (2, 2′) angeordnet sind, wobei das Mitnahmeorgan (17, 17′) von jeder der Brüheinrichtungen (2, 2′) den peripheren Umfang der Antriebsspindel (5) um höchstens den Teil umfasst, der durch den reziproken Wert der Anzahl der Brüheinrichtungen (2, 2′) gegeben ist.

3. Antriebsvorrichtung nach Anspruch 1 oder 2, dadurch gekennzeichnet, dass das erste Führungsmittel ein Aussengewinde (8) ist und dass das Mitnahmeorgan (17, 17′) im wesentlichen die Gestalt eines sektorförmigen Ausschnittes eines Hohlzylinders aufweist und mit, dem Aussengewinde (8) entsprechenden Teilgewindegängen eines Innengewindes versehen ist.

4. Antriebsvorrichtung nach einem der Ansprüche 1 bis 3, dadurch gekennzeichnet, dass das Mitnahmeorgan (17, 17′) lösbar mit dem Brühzylinder (9, 9′) verbunden und in der Brühzylinderachse (27, 27′) verschiebbar zum letzteren angeordnet ist.

5. Antriebsvorrichtung nach einem der Ansprüche 2 oder 3, dadurch gekennzeichnet, dass jede der Brüheinrichtungen (2, 2′) zum Ausgleichen der Steigung des Aussengewindes (8) höhenversetzt zur benachbarten Brüheinrichtung angeordnet ist.

6. Antriebsvorrichtung nach einem der Ansprüche 3 bis 5, dadurch gekennzeichnet, dass die Steigung des Aussengewindes (8) so gewählt ist, dass bei der Zufuhr von Wasser unter Druck in die Brühkammer, jeder der Brühzylinder (9, 9′) infolge der Gewindereibung in seiner vorher eingestellten Position verharrt.

## Claims

1. A drive apparatus for the brewing device (2) of a coffee machine with a frame (3, 4), a drive spindle (5) mounted rotatably on the frame with at least one first guide means (8) which runs spirally over essentially the entire length of the drive spindle (5), the brewing device (2) comprising a brewing cylinder (9) and two pistons (10, 11) to form a brewing chamber, and the brewing cylinder (9) and the pistons (10, 11) being displaceable along the brewing cylinder axis (27) relative to each other, and the drive spindle (5) runs parallel to the brewing cylinder axis (27), characterized in that on the brewing cylinder (9) there is a drive element (17) with a second guide means which engages in the first guide means (8) of the drive spindle (5), and the drive element (17) encompasses at most half of the peripheral circumference of the drive spindle.

2. The driving apparatus according to claim 1, characterized in that disposed around the periphery of the drive spindle (5) there are several brewing devices (2, 2'), the drive element (17, 17') of each of the brewing devices (2, 2') encompassing the peripheral circumference of the drive spindle (5) by at most the portion given by the reciprocal value of the number of brewing devices (2, 2').

3. The drive apparatus according to claim 1 or 2, characterized in that the first guide means is an outer thread (8) and in that the drive element (17, 17') has essentially the form of a sector-shaped cut-out of a hollow cylinder and is provided with the partial threads of an inner thread corresponding to the outer thread (8).

4. The drive apparatus of one of the claims 1 to 3, characterized in that the drive element (17, 17') is detachably connected to the brewing cylinder (9, 9') and is displaceable to the latter along the brewing cylinder axis (27, 27').

5. The drive apparatus of one of the claims 2 or 3, characterized in that each of the brewing devices (2, 2') is height offset towards the adjacent brewing device to compensate the pitch of the outer thread (8).

6. The drive apparatus of one of the claims 3 to 5, characterized in that the pitch of the outer thread (8) is chosen so that when water is introduced into the brewing chamber under pressure each of the brewing cylinders (9, 9') is locked in its previously set position due to the friction of the threads.

## Revendications

1. Dispositif d'actionnement pour un dispositif d'infusion (2) d'une machine à café avec un bâti (3, 4), une vis d'entraînement (5) liée au bâti de manière à pouvoir pivoter avec au moins un premier moyen de guidage (8) s'étendant comme un filetage pour l'essentiel sur toute la longueur de la vis d'entraînement (5), le dispositif d'infusion (2) comprenant un cylindre d'infusion (9) et deux pistons (10, 11) formant une chambre d'infusion, le cylindre d'infusion (9) et les pistons (10, 11) étant déplaçables les uns par rapport aux autres dans l'axe du cylindre d'infusion (27), la vis d'entraînement (5) s'étendant parallèlement à l'axe du cylindre d'infusion (27), caractérisé par un organe d'entraînement (17) avec un deuxième moyen de guidage prévu sur le cylindre d'infusion (9), l'organe d'entraînement étant engagé dans le premier moyen de guidage (8) de la vis d'entraînement (5) et entourant au maximum la moitié de la périphérie de la vis d'entraînement.

2. Dispositif d'actionnement selon la revendication 1, caractérisé par plusieurs dispositifs d'infusion (2, 2') répartis autour de la périphérie de la vis d'entraînement (5), l'organe d'entraînement (17, 17') de chacun des dispositifs d'infusion (2, 2') entourant au maximum la partie de la périphérie de la vis d'entraînement (5) correspondant à l'inverse du nombre des dispositifs d'infusion (2, 2').

3. Dispositif d'actionnement selon la revendication 1 ou 2, caractérisé en ce que le premier moyen de guidage est un filetage externe (8) et en ce que l'organe d'entraînement (17, 17') présente pour l'essentiel la forme d'un tronçon sectoriel de cylindre creux et est muni d'un filetage partiel interne avec un pas de filetage correspondant au filetage externe (8).

4. Dispositif d'actionnement selon l'une des revendications 1 à 3, caractérisé en ce que l'organe d'entraînement (17, 17') est lié de manière non permanente au cylindre d'infusion (9, 9') et est déplaçable par rapport à celui-ci dans l'axe du cylindre d'infusion (27, 27').

5. Dispositif d'actionnement selon l'une des revendications 2 ou 3, caractérisé en ce que chacun des dispositifs d'infusion (2, 2') est décalé en hauteur par rapport au dispositif d'infusion voisin de manière à compenser le pas du filetage externe (8).

6. Dispositif d'actionnement selon l'une des revendications 3 à 5, caractérisé en ce que le pas du filetage externe (8) est choisi en sorte que lors de l'introduction d'eau sous pression dans la chambre d'infusion, chaque cylindre d'infusion (9, 9') reste en raison du frottement de filetage dans sa position fixée auparavant.
